# EUROPEAN PATENT APPLICATION

(11) **EP 4 748 270 A1**
(43) Date of publication of application: **27.05.2026**
(21) Application number: 25172004.1
(22) Date of filing: 23.04.2025
(51) Int. Cl.: A45F 5/00

(54) **GLASSES HANGER**

(30) Priority: 22.11.2024 CN 202422860045 U
(71) Applicant: Yiwu Weimiao Technology Co., Ltd., Jinhua City Zhejiang Province (CN)
(72) Inventor: YE, Kexiao, Jinhua City (CN); LIANG, Changqing, Jinhua City (CN)
(74) Representative: Chung, Hoi Kan

(57) **Abstract**

A glasses hanger comprises a hanger body, wherein the hanger body is provided with a through hole with a strip-shaped hole structure, the hanger body is further provided with a hanging hole with a rectangular hole structure, the hanging hole is connected to the through hole, a width of the hanging hole is smaller than the width of the through hole, and the hanging hole is arranged to hang a temple bending; a rotating shaft is threadedly connected to the hanger body, a limiting plate is rotatably provided on the rotating shaft, and the limiting plate is located in the through hole. By designing a through hole and a hanging hole, the present invention is compatible with glasses temples of different thicknesses and is suitable for hanging different types of glasses.

## Description

### Technical Field

The present invention relates to the technical field of hanger structures, in particular to a glasses hanger.

### Background Technology

Glasses hangers are usually designed to be small and lightweight, and can be easily hung on clothing, bags or specific keychains, so that glasses will not be lost or damaged by being randomly placed when not in use. The glasses can be hung by passing glasses temples through the hangers, then folding the glasses temples, and hanging the glasses arms on the hanging holes of the hangers. For people who often need to carry glasses, the hangers make it more convenient to carry glasses. However, in actual use, there are many types of glasses, including myopia glasses, hyperopia glasses, Al glasses, astigmatism glasses and sunglasses, etc. Different glasses have different designs of glasses temples with different sizes and thicknesses, which leads to one type of glasses hanger not being able to compatible with different types of glasses hanging.

### Summary of the Invention

In order to solve the above technical problems, the present invention provides a glasses hanger to solve the following problems in a structure of the glasses hanger in the prior art due to a single hanging hole and a fixed size: If the hanging hole of the hanger is small, it will not allow the thicker glasses temple to pass through; If the hanging hole of the hanger is larger, after the thicker glasses temples are passed through, as a glasses temple bending is usually thinner, the temple bending tends to wobble in a larger hanging hole, resulting in unstable suspension of the glasses temples from the hanger, or even the glasses temples slipping off.

The object and benefit of a glasses hanger provided by the present invention are achieved by the following specific technical solutions:
A glasses hanger comprises a hanger body, wherein the hanger body is provided with a through hole with a strip-shaped hole structure, the hanger body is further provided with a hanging hole with a rectangular hole structure, the hanging hole is connected to the through hole, a width of the hanging hole is smaller than the width of the through hole, and the hanging hole is arranged to hang a temple bending; a rotating shaft is threadedly connected to the hanger body, a limiting plate is rotatably provided on the rotating shaft, and the limiting plate is located in the through hole. Further, the limiting plate is provided with two slots, and both of the two slots are semi-spherical structures.

Further, the hanger body is provided with two mounting grooves with cylindrical groove-like structures, a locking ball and a coil spring are placed inside each mounting groove, a blocking block is threadedly tightened inside each mounting groove, the locking ball is matched with a position of the slots on the limiting plate; the blocking block is threadedly tightened to facilitate installation of the locking ball and the coil spring.

Further, the hanger body is provided with two communicating holes with circular hole-like structure, the two communicating holes are respectively connected to the two mounting grooves, and diameters of the communicating holes are smaller than the diameters of the mounting grooves.

Further, when the blocking block is tightened, the two locking balls are exposed under elastic force of the coil spring; the limiting plate is fixed and limited to the hanger body by means of the locking balls and the slots.

Further, a hanging loop is fixedly arranged on the hanger body.

Further, an auxiliary block is clamped in the hanging hole, the auxiliary block is made of a deformable damping material, the auxiliary block is in contact with the temple bending, and the deformable damping material may comprise a rubber material, a silicone material, a soft leather material, etc.

Further, a sliding groove is provided on a bottom end surface of the limiting plate, and a strip groove is provided on both a front end surface and a rear end surface of the limiting plate, both strip grooves communicating with the sliding groove.

Further, a blocking plate is slidably arranged in the sliding groove, the blocking plate and the sliding groove are in interference fit, and a toggle pin is fixed to a front end face and a rear end face of the blocking plate, with two toggle pins sliding in the two strip grooves respectively and the blocking plate is arranged to be in contact with the temple bending.

Further, the blocking plate is made of a deformable damping material, which may comprise a rubber material, a silicone material, a deformable leather material, etc.

Compared with the prior art, the present invention boasts for the following beneficial effects: the present invention can be compatible with glasses temples of different thicknesses by designing the through hole and the hanging hole, which are suitable for hanging different types of glasses. Meanwhile, the present invention ensures the solidity of the limiting plate when it is closed by the design of the limiting plate, the combination of the locking ball and the coil spring, and the design of the slots. The through hole can be closed when the limiting plate is closed, preventing the glasses from shaking too much in a wider through hole.

In terms of glasses carrying, the hanging loop makes it easy to string a lanyard through, allowing users to hang the hanger around their neck for easy carrying.

In terms of component protection, the setting of auxiliary block made of deformable damping material in the hanging hole effectively reduces wear and tear on the temple bending when hanging; the blocking plate made of damping material in the sliding groove not only limits a movable space of the temple bending to avoid shaking when contacting the temple bending, but also makes the temple bending surrounded by the deformable damping material, which plays a better role in protecting the temple bending.

### Brief Description of the Drawings

Figure 1 illustrates an axial schematic view of a glasses hanger according to the present invention.
Figure 2 illustrates a front schematic view of the glasses hanger according to the present invention.
Figure 3 illustrates an axial schematic view of the glasses hanger after adjustment according to the present invention.
Figure 4 illustrates a front schematic view of the glasses hanger after adjustment according to the present invention.
Figure 5 illustrates an axial schematic view of a split structure of the glasses hanger according to the present invention.
Figure 6 illustrates an axial schematic view of the glasses hanger in FIG. 5 after rotation according to the present invention.
Figure 7 illustrates an axial schematic view of the glasses hanger after hanging the glasses in Figure 1 according to the present invention.
Figure 8 illustrates an axial schematic view of the glasses hanger in Figure 7 after rotation according to the present invention.

Reference signs in the accompanying figures are indicated as below:
1-hanger body; 101-through hole; 102-hanging hole; 103-mounting groove; 104-communicating hole; 2-rotating shaft; 3-limiting plate; 301-slot; 302-sliding groove; 303-strip groove; 304-blocking plate; 305-toggle pin; 401-locking ball; 402-coil spring; 403-blocking block; 5-auxiliary block; 6-hanging loop; 7-temple bending.

### Specific Embodiments

In order to clearly explain the objects, technical solutions, and advantages of the embodiments of the present invention, the technical solutions of the embodiments of the present invention will be clearly and completely described below with reference to the drawings in the embodiments of the present invention. Obviously, the described embodiments are part of the embodiments of the present invention, not all of the embodiments of the present invention. Based on the described embodiments of the present invention, all other embodiments obtained by those skilled in the art without creative effort fall within the scope of the present invention. Unless otherwise defined, technical or scientific terms used in the description shall have the ordinary meaning understood by those skilled in the art. The words "a", "one", or "the" and the like used in the description of the present invention and in the claims also do not indicate a quantitative limitation, but rather indicate that there is at least one. Words "include/includes/including" or "comprise/ comprises/comprising" and similar words indicate that a component or object preceded by the word covers the components or objects and their equivalents listed after the word. Terms such as "connect/connected/connecting" or "communicate/ communicated/communicating" are not limited to physical or mechanical connections, but may include direct or indirect electrical connections. Words "top", "bottom", "left", "right", etc. are only used to indicate relative positional relationships, and the relative positional relationships may change accordingly when absolute positions of the described object changes.

Examples of the present invention are described in further detail below with reference to the accompanying drawings and embodiments.

### Embodiment 1:

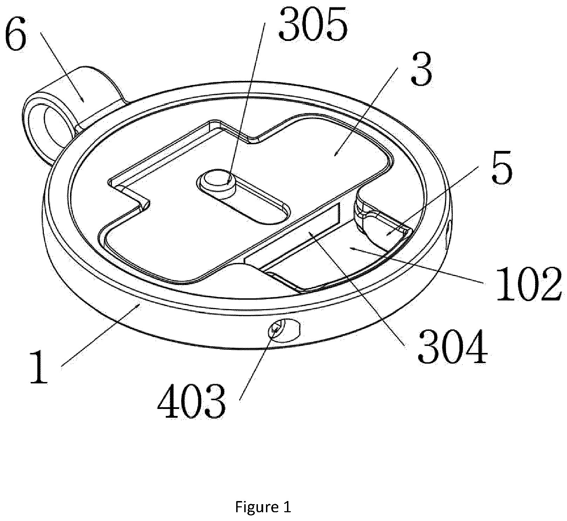

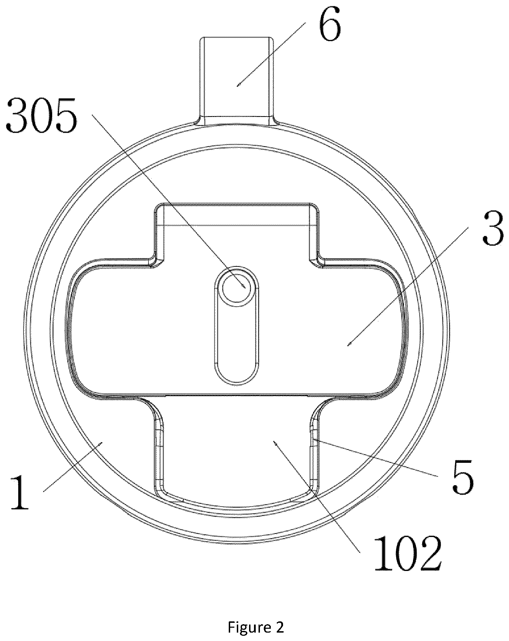

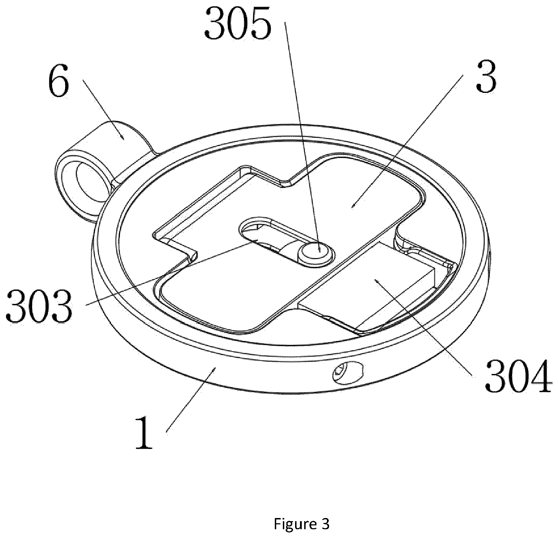

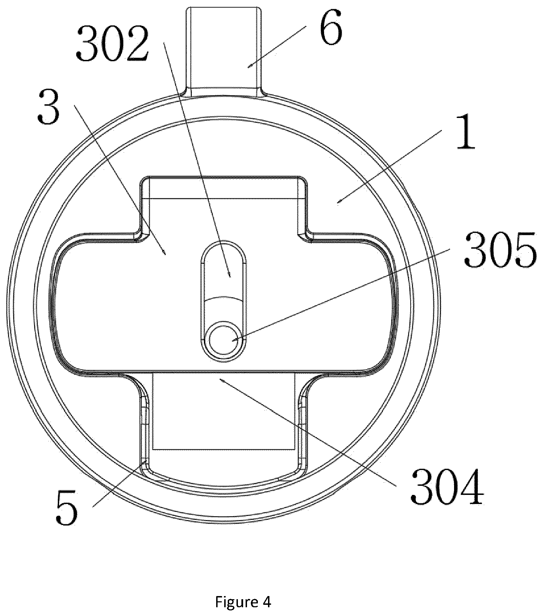

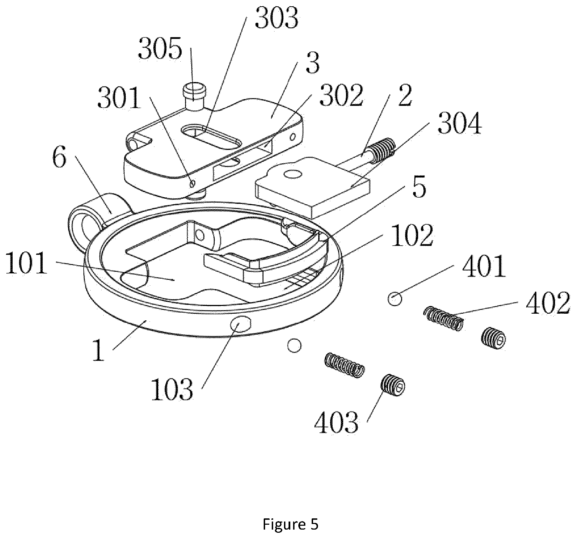

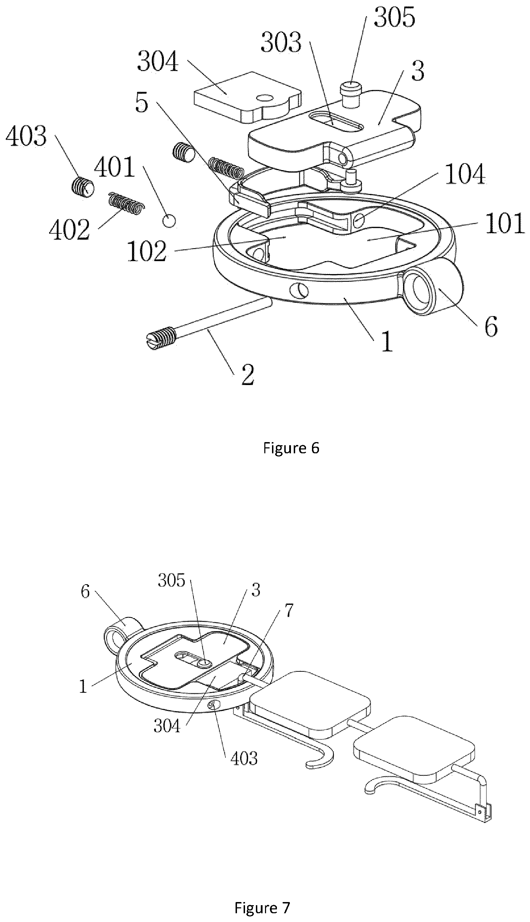

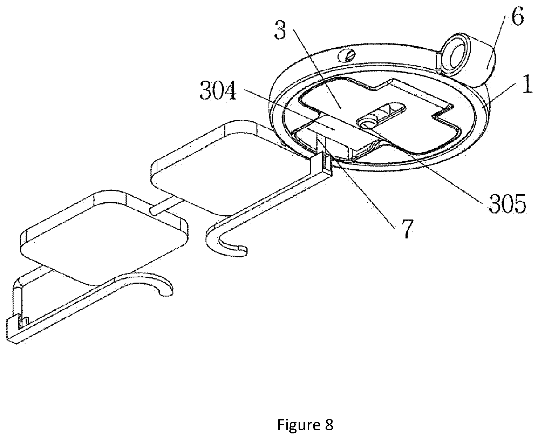

With reference to Figures 1 to 8:
The present invention provides a glasses hanger comprising a hanger body 1, wherein the hanger body 1 is provided with a through hole 101 with a strip-shaped hole structure, the hanger body 1 is further provided with a hanging hole 102 with a rectangular hole structure, the hanging hole 102 is connected to the through hole 101, a width of the hanging hole 102 is smaller than the width of the through hole 101, and a temple bending 7 is hung at the hanging hole 102. As shown in Figure 7, after passing through the wider through-hole 101, the glasses temples are folded, and the temple bending 7 is hung on the hanging hole 102 for hanging; a rectangular and rectangular hole-shaped structure on the hanger body 1 allow the glasses temples to pass through easily, and then be hung through the temple bending 7, promoting simple and quick operation.

A rotating shaft 2 is threadedly connected to the hanger body 1, a limiting plate 3 is rotatably provided on the rotating shaft 2, and the limiting plate 3 is located in the through hole 101.

The limiting plate 3 is provided with two slots 301, and both of the two slots 301 are semi-spherical slot-shaped structures.

The hanger body 1 is provided with two mounting grooves 103 with cylindrical groove-like structures, a locking ball 401 and a coil spring 402 are placed inside each mounting groove 103, a blocking block 403 is threadedly tightened inside each mounting groove 103, the locking ball 401 is matched with a position of the slots 301 on the limiting plate 3; the blocking block 403 is threadedly tightened to facilitate installation of the locking ball 401 and the coil spring 402.

The hanger body 1 is provided with two communicating holes 104 with circular hole-like structure, the two communicating holes 104 are respectively connected to the two mounting grooves 103, diameters of the communicating holes 104 are smaller than the diameters of the mounting grooves 103, avoiding that the locking ball 401 falls out from the communicating holes 104.

When the blocking block 403 is tightened, the two locking balls 401 are exposed under elastic force of the coil spring 402; the limiting plate 3 is fixed and limited to the hanger body 1 by means of the locking balls 401 and the slots 301.

A hanging loop 6 is fixedly arranged on the hanger body 1, so that a lanyard can be strung into the hanging loop 6 to allow the hanger be worn on a user's neck during use, which is convenient to carry.

An auxiliary block 5 is clamped in the hanging hole 102, the auxiliary block 5 is made of a soft damping material, and the auxiliary block 5 is in contact with the temple bending 7. During hanging, wear and tear on the temple bending 7 can be reduced by means of the auxiliary block 5 made of the silicone material.

A sliding groove 302 is provided on a bottom end surface of the limiting plate 3, and a strip groove 303 is provided on both a front end surface and a rear end surface of the limiting plate 3, both strip grooves 303 communicating with the sliding groove 302.

A blocking plate 304 is slidably arranged in the sliding groove 302, and the blocking plate 304 and the sliding groove 302 are in interference fit. Due to high friction caused by the silicone material, the interference fit ensures that the blocking plate 304 will not slide due to shaking in the sliding groove 302, which makes it easy for the user to adjust a position of the blocking plate 304 artificially by means of toggle pins 305. A toggle pin 305 is fixed to a front end face and a rear end face of the blocking plate 304, with two toggle pins 305 sliding in the two strip grooves 303 respectively and the blocking plate 304 being in contact with the temple bending 7. When the temple bending 7 is suspended at a position of the auxiliary block 5, a moving space of the temple bending 7 is limited by pivoting the toggle pins 305 downwardly by hand until the blocking plate 304 comes into contact with the temple bending 7, preventing the temple bending 7 from swaying at the position of the auxiliary block 5.

The blocking plate 304 is made of the silicone material to restrict a moving space of the temple bending 7 and avoid the temple bending 7 from shaking when the blocking plate 304 is in contact with the temple bending 7; meanwhile, with the auxiliary block 5 made of the silicone material, the temple bending 7 is wrapped around silicone, which plays a better protective role.

### Working principle:

When hanging, if the glasses temples are thin, the blocking plate 304 is pushed upward by hand, the glasses temples are passed through the hanging hole 102, and the temple bending 7 is directly hung;

When the glasses temples are too thick, the limiting plate 3 is rotated to open, and the glasses temples are then passed through the wider through hole 101, and then the glasses temples are folded, and the temple bending 7 is hung in the hanging hole 102 for hanging, and then the limiting plate 3 is rotated to reset to close and fix by means of the locking ball 401; after the hanging is completed, the toggle pins 305 are toggled downwardly by hand until the blocking plate 304 is in contact with the temple bending 7;

When hanging, a lanyard can be strung into the hanging loop 6 to allow the hanger be worn on a user's neck as an ornament.

Although the present application has been described with reference to the above embodiments, those skilled in the art will appreciate that various changes can be made without departing from the idea and scope of the present application as defined by the appended claims. While the present description contains many specific details of implementation, these should not be construed as limitations on the scope of protection claimed in this application, but rather as descriptions of features specific to particular embodiments. The scope of the application is defined by the appended claims and their equivalents, and is not limited to the embodiments described above.

## Claims

1. A glasses hanger comprising a hanger body (1), wherein the hanger body (1) is provided with a through hole (101) with a strip-shaped hole structure, the hanger body (1) is further provided with a hanging hole (102) with a rectangular hole structure, the hanging hole (102) is connected to the through hole (101), a width of the hanging hole (102) is smaller than the width of the through hole (101), and the hanging hole (102) is arranged to hang a temple bending (7); a rotating shaft (2) is threadedly connected to the hanger body (1), a limiting plate (3) is rotatably provided on the rotating shaft (2), and the limiting plate (3) is located in the through hole (101).

2. The glasses hanger according to claim 1, wherein the limiting plate (3) is provided with two slots (301), and both of the two slots (301) are semi-spherical structures.

3. The glasses hanger according to claim 2, wherein the hanger body (1) is provided with two mounting grooves (103) with cylindrical groove-like structures, a locking ball (401) and a coil spring (402) are placed inside each mounting groove (103), a blocking block (403) is threadedly tightened inside each mounting groove (103), the locking ball (401) is matched with a position of the slots (301) on the limiting plate (3); the blocking block (403) is threadedly tightened to facilitate installation of the locking ball (401) and the coil spring (402).

4. The glasses hanger according to claim 3, wherein the hanger body (1) is provided with two communicating holes (104) with circular hole-like structure, the two communicating holes (104) are respectively connected to the two mounting grooves (103), and diameters of the communicating holes (104) are smaller than the diameters of the mounting grooves (103).

5. The glasses hanger according to claim 4, wherein when the blocking block (403) is tightened, the two locking balls (401) are exposed under elastic force of the coil spring (402); the limiting plate (3) is fixed and limited to the hanger body (1) by means of the locking balls (401) and the slots (301).

6. The glasses hanger according to claim 5, wherein a hanging loop (6) is fixedly arranged on the hanger body (1).

7. The glasses hanger according to claim 6, wherein an auxiliary block (5) is clamped in the hanging hole (102), the auxiliary block (5) is made of a deformable damping material, and the auxiliary block (5) is arranged to be in contact with the temple bending (7).

8. The glasses hanger according to claim 7, wherein a sliding groove (302) is provided on a bottom end surface of the limiting plate (3), and a strip groove (303) is provided on both a front end surface and a rear end surface of the limiting plate (3), both strip grooves (303) communicating with the sliding groove (302).

9. The glasses hanger according to claim 8, wherein a blocking plate (304) is slidably arranged in the sliding groove (302), the blocking plate (304) and the sliding groove (302) are in interference fit, and a toggle pin (305) is fixed to a front end face and a rear end face of the blocking plate (304), with two toggle pins (305) sliding in the two strip grooves (303) respectively and the blocking plate (304) being arranged to be in contact with the temple bending (7).

10. The glasses hanger according to claim 9, wherein the blocking plate (304) is made of a deformable damping material.
